# EUROPEAN PATENT APPLICATION

(11) **EP 1 176 766 A1**
(43) Date of publication of application: **30.01.2002**
(21) Application number: 00306304.7
(22) Date of filing: 24.07.2000
(51) Int. Cl.: H04L 12/56

(54) **Telecommunications network having prioritised quality of service arrangements**

(71) Applicant: LUCENT TECHNOLOGIES INC., Murray Hill, New Jersey 07974-0636 (US)
(72) Inventor: Chen, Xiaobao, Swindon, Wilshire SN5 5DQ (GB)
(74) Representative: Buckley, Christopher Simon Thirsk

(57) **Abstract**

In a telecoms network, RSVP services are controlled by a proxy server (12A or 34A). RSVP session set-up is prioritised by each request for a session containing a priority level; the proxy server checks whether network resources are sufficient for a new session and, if not, the proxy server closes a current RSVP session of lower priority. Optionally the network is a mobile network.

## Description

This invention relates to a telecommunications network having a prioritised quality of service arrangement, for example to a mobile network such as GPRS (General Packet Radio Service) or EDGE (Enhanced Data rates for GSM Evolution) using Internet Protocol (IP).

In a modern telecommunications network using IP, Quality of Service (QoS) provisions are defined by international standards. One QoS standard for signaling is RSVP (Resource reSerVation Protocol). RSVP provides QoS requests from receivers to all router nodes along the transit path of traffic, maintains the soft-state (Path/Reservation states), and results in resources being reserved in each router.

One problem with existing RSVP implementations is that they are platform and application dependent, which leads to limited use in some operating systems and applications. A further problem is that priority issues in reserving network resources during RSVP session set-up are not addressed, so that all mobiles are of the same priority; thus a mission critical mobile requiring stringent QoS control may fail to set up a RSVP session, simply because resources have been taken up by other mobiles who are not sending mission critical information.

It is an object of the invention to provide a prioritised QoS session set-up which can guarantee access for mission critical mobiles.

The concept of use of a proxy or agent to provide QoS is disclosed in applicant's co-pending patent application "Proxy Server Supporting IP Quality of Service" filed on 26 February 1999 as Patent Application number 99301429.9, but the arrangement does not provide for prioritisation of calls or mobile requirements.

According to the invention, in a telecommunications network comprising a plurality of users and at least one proxy means for configuring a Quality of Service session, a method of Quality of Service session set-up characterised by the steps of:-
receiving a request from a user for a Quality of Service session of specified priority level;
reviewing the priority level of the request;
reviewing the network resources currently available and determining whether resources are sufficient to meet the request;
and if resources are not sufficient, closing an existing Quality of Service session of lower priority, and initiating Quality of Service session set-up in accordance with the request.

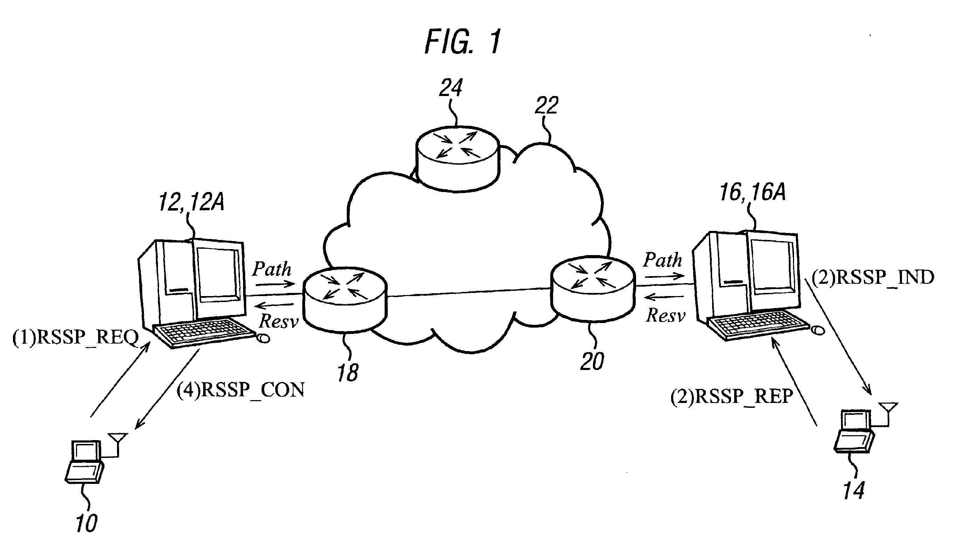

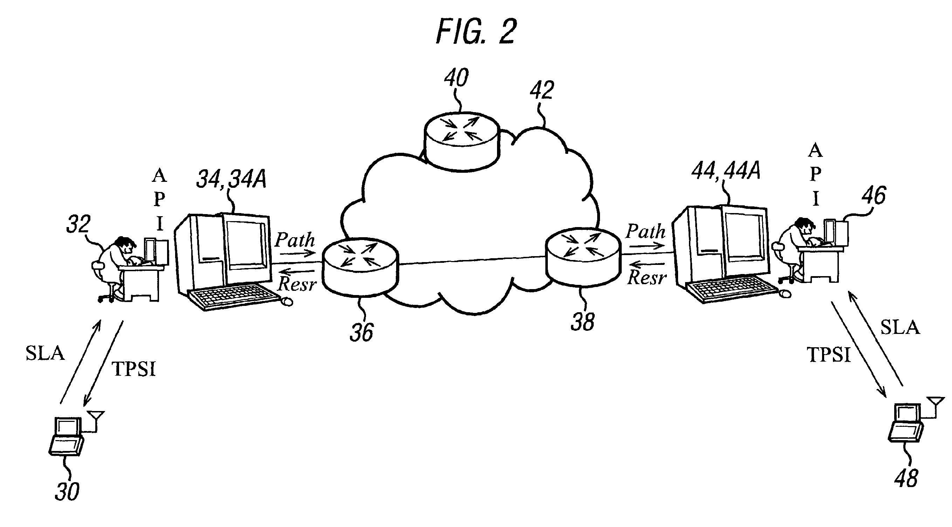

The invention will be described by way of example with figures 1 and 2 of the accompanying drawings in which:-
Figure 1 illustrates the registration process in a mobile telecommunications network; and
Figure 2 illustrates proxy agent invocation in such a network.

In Figure 1, a first mobile 10 in a first network is associated with a first node 12. A second mobile 14 in a second network is associated with a second node 16. Each node 12, 16 communicates with a router 18, 20 in an IP network 22 which contains other routers 24. Such an arrangement is well known. The mobile, 10, 14 may be mobile telephones, PCs or transportable computers such as laptops or other mobile equipment running services requiring high quality connections, such as video applications.

In the inventive arrangement as illustrated, the nodes 12, 16 each contain a proxy RSVP agent, 12A, 16A, as described in application number 99301429.9, incorporated herein by reference. In variations, the proxy agents may be located in other items of network equipment as convenient.

When packets are sent during a QoS session, the routers used must be QoS-capable.

Suppose now that the first mobile wishes to communicate with a second mobile 14 in a mission critical manner so that a QoS session such as RSVP must be set up across the IP network 22, and priority must, if at all possible, be given to the call.

### DISCOVERY OF RSVP PROXY

The first step is for the mobile 10 to discover whether a RSVP proxy exists; this can be achieved either by use of a proxy RSVP agent advertisement process, or by use of a proxy RSVP agent solicitation process.

### A) Proxy RSVP Agent Advertisement

In this process, the proxy 12A provides an advertisement of its location by sending Client Request Messages (CRQM). A CRQM can be a UDP (User Data Protocol) packet which carries the information about the current location of the proxy 12A and the services which it can provide. The messages can be sent by multi-cast or broadcast. When a client such as mobile 10 receives such a message, it stores the information in a proxy RSVP agent registry (not illustrated).

Typically the advertisement information will include
i) The IP address of the proxy RSVP agent 12A or 16A;
ii) The service access point, specifically a port number, on which the proxy is listening for incoming service requests;
iii) The lifetime of the agent (default lifetime is eternal);
iv) The security control information such as security key or index to be used between the proxy agent and its clients;
v) The services to be provided; for example the proxy agent may provide only a subset of IntServe services in its RSVP session set-up service (Controlled Load or Guaranteed Service only); also the proxy agent may provide all or just one or two of the three RSVP reservation styles FF, WF and SE.

The CRQM will be transmitted periodically in order to guarantee transmission reliability and to provide the information to new clients. The transmission interval will be design and implementation dependent, and may well be decided by the lifetime of the proxy RSVP agent registry in a client. For example, the transmission interval can be one quarter of the lifetime of the agent registry in a client, so that the client is allowed to miss four agent advertisement messages before it deletes its registry from the list of its valid agents.

Once a proxy RSVP agent has advertised itself, it should be arranged to service the clients which have successfully registered with it (see below). If the agent is heavily loaded, delays may occur. This problem can be alleviated by providing multiple proxy RSVP agents in the same network (not illustrated).

As an alternative to a CRQM message, an ICMP (Internet Control Message Protocol) message can be used.

### B) Proxy RSVP Agent Solicitation

When a client such as mobile 10 requires an RSVP session but does not have an agent registered in its own list of valid proxy RSVP agents, the client can send Agent Soliciting Messages (ASMs). A proxy RSVP agent in the vicinity which is running in its normal service state will respond to the soliciting client with a uni-cast agent advertisement message Agent Response Message (ARM).

Typically the ASM can be a UDP message sent by multi-cast or broadcast, including its destination address. In addition, the ASM contains:-
i) The IP address of the client
ii) The requested RSVP session services, including the reservation style, unicast or multicast, Controlled Load or Guaranteed Service etc.
iii) The requested lifetime of service - this must be indicated or the proxy will reject the service request.
iv) The requested service priority.
v) The security control information such as the encryption key.

The ARM message can be a UDP message with the soliciting client's address as the destination address. It may also contain:-
i) The confirmation of the validity of the solicitation of the client.
ii) The availability or the confirmation of the requested RSVP session service.
iii) The suggested lifetime of the service - this should be no longer than the required service time.
iv) The security control information such as the encryption key or the authentication information to be used during the interaction between the client and the agent.

### REGISTRATION OF PROXY RSVP AGENT

Once the mobile 10 is aware of the presence and location of the proxy agent, the next step is for the mobile to register with the proxy agent by sending a unicast Client Registration Message (CRGM); this can be a UDP message and typically contains:-
i) The explicit QoS requirements, such as specifications or average data rate, maximum delay, delay variation, peak rate and packet loss rate OR
   The implicit QoS requirements such as specific coding algorithm s and the codecs being used by the clients, e.g. H.261, MPEG-1, etc.
ii) The selected signalling protocol type, Type "1" is reserved for RSVP.
iii) The selected QoS control type, Type "1" is reserved for Integrated Service QoS control.
iv) The requested service time during which the client expects the Proxy RSVP Agent to set up and maintain its RSVP session(s).
v) Security control information such as the authentication information and encryption key.
vi) The requested priority of the RSVP session set-up service.

A CRGM message can be one of the following five types:-
i) RSSP_REQ:A RSSP (RSVP Session Set-up Protocol) service request message sent from a client to a Proxy RSVP Agent. It is usually sent by a client serving as a data sender to invoke the transmission of RSVP *Path* messages through the Proxy RSVP Agent. ii) RSSP_IND: An RSSP service indication message issued by a Proxy RSVP Agent and sent to a specific RSVP client serving as a data receiver. It indicates the arrival of *Path* messages at the Proxy RSVP Agent for a particular flow to be received by the client.
iii) RSSP_REP: An RSSP session service response message issued by a RSVP client as an indication to the Proxy RSVP Agent to start sending RSVP *Resv* messages.
iv) RSSP_CON: An RSSP session service confirmation message issued by a Proxy RSVP Agent at the data sender's side to confirm the arrival of *Resv* messages at the Proxy RSVP Agent and usually the successful set-up of a RSVP session.
v) RSSP_REJ: An RSSP session service rejection message issued by a Proxy RSVP Agent as an indication of the failure of setting up of a RSVP session, in particular, when the Proxy RSVP Agent receives *PathErr/ResvErr* messages reporting errors during the set-up of *Path/Resv* states at certain routers.

Figure 1 illustrates the control procedures and control messages exchanged during a client registration process and RSVP session set-up; the messages are exchanged between mobile 10 and its proxy agent 12A, and between the proxy agents 12A and 16A. The intermediate routers 18, 20, which are RSVP capable, are informed of a specific data transmission.

Considering the messages in detail when mobile 10 is the sender and mobile 14 is the receiver;
Mobile 10 sends a RSSP_REQ message to proxy RSVP agent 12A
agent 12A sends a PATH message to router 18
router 18 transmits *PATH* message with all required information to router 20
router 20 sends a PATH message to proxy RSVP agent 16A
agent 16A sends a RSSP_IND message to mobile 14
Mobile 14 responds with a RSSP_REP message to proxy 16A
proxy 16A sends a RESV message to router 20
router 20 transmits a *RESV* message with all required information to router 18
router 18 sends a *-RESV* message to proxy 12A
proxy 12A sends a RSSP_CON message to - mobile 10

The RSVP session has now been set up. Proxy 12A serves mobile 10 as the data sender and proxy 16A serves mobile 14 as a receiver. The proxy agents 12A, 16A send periodic PATH/RESV messages to refresh the RSVP soft-states until an explicit agent deregistration request is received or the requested service time expires.

If the RSVP session set-up fails, a CRGM message of the RSSP_REJ type is sent by the proxy to its client which issues a CRGM message of the RSSP_REQ type to request a RSVP session set-up.

### PRIORITISING A RSVP SESSION

Prioritisation of an RSVP session can be achieved in two ways; the first is through RSSP, and the second is by use of proxy RSVP agent APIs (Application Programming Interfaces).

### A) Prioritisation Through RSSP

As explained above, the receiving mobile 14 presents its QoS request in a CRQM message of the type RSSP_REP, which contains the requested service priority. On receipt of the message, the proxy 16A checks to see if this priority is higher than, equal to or less than the priority to which the mobile 14 is entitled. If the requested priority is higher than the entitlement of the mobile, a CRGM message, RSSP_REJ is sent back to the mobile 14.

If the requested priority is not higher than the entitlement, the RSVP session set-up process proceeds. The process depends on whether there are enough resources in the network to support the new request.
i) If there are not enough resources in the network, for example if a RESV message is dispatched by proxy 16A and a RESV ERR message is received, then the priority of the new service request is checked by proxy 16A against the service priorities of all existing active RSVP sessions The RSVP session with the lowest service priority is shut down by sending a RESV TEAR message to the affected mobile and then the RESV message corresponding to the new service request is dispatched by proxy 16A. The new service request pre-empts an existing RSVP session of lower priority.
   The process is repeated until one of two situations arises.
   a) The RSVP session corresponding to the new service request is successfully set up.
   b) All existing RSVP active sessions have the same or higher service priorities than the new request, and there are still not enough resources to support the new request; the new request is then rejected by sending a CRGM message of the type RSSP_REJ to the mobile 14.
ii) If there are enough resources throughout the network involved in the RSVP session, i.e. if no error is reported after dispatching the RESV message (and optionally a RESVCONF message is received by the proxy agent), then the new RSVP session is set up and no existing RSVP session needs to be pre-empted.
iii) If a client mobile is pre-empted, its RSVP session status is recorded by its proxy agent before the RSVP session is closed. When another existing RSVP session is closed, the proxy agent will perform the normal set-up process for the pre-empted client, i.e., the proxy attempts to reinstate the RSVP session for its client.

### B) Prioritisation Through API

The example given so far relates to mobiles 10, 14 which are able to use RSSP to initiate RSVP sessions via the respective proxy agents 12A, 16A. This invention can also be applied in other circumstances, e.g. when a client/agent interaction interface is not available in an application, and such an interface cannot easily be added. This may be the position for a commercially marketed application run as a black box. In such circumstances, the proxy RSVP agent is designed to present an API for network operators or application mobiles to enter, e.g. "type in", the specific QoS specification/request to set up a RSVP session for that application.

The arrangement is illustrated in Figure 2. A mobile terminal 30 running a "black box" application communicates through a Third Party Service Initiator (TPSI) 32 which has an API interface to a node 34 running a proxy RSVP agent 34A. There are a number of routers 36, 38, 40 in an IP network 42; a further node 44 having a proxy 44A and a further TPSI 46 with which a second mobile terminal 48 communicates, are also present; the terminal 48 may also run a black box application.

Such an arrangement exists when mobiles 30, 48 are public Internet service mobiles, who register with their respective Internet Service Providers, i.e., the TPSI, which reaches a Service Level Agreement (SLA) with the mobiles. A SLA includes the access right to a proxy RSVP agent and the associated service levels including the service priority entitlement of the client. The SLA is usually static unless changed with the agreement of both the mobile and its ISP.

The TPSI can alternatively be a network operator or a private or corporate network.

The legitimacy of the RSVP session set-up service request is now controlled by the TPSI.

Depending on the SLA for the RSVP client, the TPSI will decide its service data transmission status, i.e. the service priority, data sender or data receiver, the access right to the proxy RSVP agent, the entitled QoS signalling type and the QoS level for each type of media transmission and receipt, and the service type etc. In designing the APIs of a proxy RSVP agent, a drag-and-fill menu is designed with parameters including those used in RSVP agent registration messages which are defined in RSSP. The ISA is mobile dependent and ISP dependent.

Referring against to Figure 2, when the mobile 30, having a SLA with the TPSI 32, begins to run an application requiring a RSVP session to be set up, the TPSI 32 issues a command to the proxy 34A to initiate the session in accordance with the preagreed SLA. The command is in the form of the "typed-in" service request. The proxy 34A then initiates session set-up, with possible pre-empting of existing active RSVP sessions as described with reference to Figure 1 in the particular example of using RSSP to prioritise the set-up; the only difference is that instead of issuing an RSSP_REJ message to the client, an error message is delivered to the TPSI 32; this may be in the form of a message reporting the failure of setting up an RSVP session, which is shown on the screen of the TPSI, or in the form of a message written to the system error log file of the proxy agent 34A

In comparison with use of RSSP, use of TPSI provides flexibility in deploying the same proxy RSVP agent for different applications running on different platforms. No change is needed to the application in order to initiate a RSVP session. The TPSI may dynamically adjust the RSVP session settings and configurations according to current network load conditions and the access status of different mobiles. A disadvantage is that the use of API/TPSI does not allow a mobile to have dynamic service updating of an existing RSVP session.

While the invention has been described with respect to setting up an RSVP session between two mobile devices, each mobile device being an RSVP client, the invention is also applicable when the client is a node, or an application running on a node. The common factor is that the RSVP client is unwilling or unable itself to send or receive or process standard RSVP messages. Further, while the invention has been described with reference to RSVP, any other conventional QoS protocol may be used.

While the invention has been described with reference to a mobile telecommunications network, it is also applicable to any network, such as a land network, in which QoS sessions are preferably prioritised.

## Claims

1. In a telecommunications network comprising a plurality of users (10,14) and at least one proxy means (12A. 16A) for configuring a Quality of Service session, a method of Quality of Service session set-up **characterised by** the steps of:-
receiving a request from a user for a Quality of Service session of specified priority level;
reviewing the priority level of the request;
reviewing the network resources currently available and determining whether resources are sufficient to meet the request;
and if resources are not sufficient, closing an existing Quality of Service session of lower priority, and initiating Quality of Service session set-up in accordance with the request.

2. A method according to Claim 1 comprising the further steps of:-
recording the QoS requirements of the closed QoS session;
and when a current QoS session terminates, reviewing the network resources currently available and, if resources are sufficient, reinstating the pre-empted QoS session.

3. A method according to Claim 1 or Claim 2 in which the request for a QoS session is contained within a RSVP Session Set-up Protocol request from a user.

4. A method according to any preceding claim in which the network is a mobile network.

5. A method according to Claim 4 in which the request for a QoS session is contained in a message from a third party service initiator (32, 46) having a service level agreement with the user (30, 48).

6. A method according to any preceding claim further comprising the initial step of a proxy means(12A, 16A) sending an advertisement message indicating its location.

7. A method according to any one of claims 1 to 5 further comprising the initial step of a mobile (10, 14) sending an agent soliciting message.

8. A method according to Claim 6 or Claim 7 comprising the further step of a mobile registering with the proxy means by sending a client registration message.

9. A mobile telecommunications network comprising at least one support node (12,16), a plurality of mobiles (10,14), and at least one means for configuring a quality of service session (12A,16A), **characterised in that** said means is arranged to review whether network resources are sufficient to support an additional requested service of known priority level and, if not, to close an existing quality of service session of lower priority.
